Europäisches Patentamt

European Patent Office

Office européen des brevets

(11) Numéro de publication: **0 046 106**

**A1**

(12) # DEMANDE DE BREVET EUROPEEN

(21) Numéro de dépôt: **81401234.0**

(51) Int. Cl.³: **G 01 T 1/164**

(22) Date de dépôt: **30.07.81**

(30) Priorité: **08.08.80 FR 8017532**

(43) Date de publication de la demande:
**17.02.82 Bulletin 82/7**

(84) Etats contractants désignés:
**DE GB NL**

(71) Demandeur: **THOMSON-CSF**
**173, Boulevard Haussmann**
**F-75360 Paris Cedex 08(FR)**

(72) Inventeur: **Roziere, Guy**
**THOMSON-CSF SCPI 173, bld Haussmann**
**F-75360 Paris Cedex 08(FR)**

(72) Inventeur: **Bardin, Jean-Louis**
**THOMSON-CSF SCPI 173, bld Haussmann**
**F-75360 Paris Cedex 08(FR)**

(74) Mandataire: **Benichou, Robert et al,**
**"THOMSON-CSF" - SCPI 173 bld Haussmann**
**F-75360 Paris Cedex 08(FR)**

(54) **Système correcteur de non-uniformité spatiale de gain pour chaîne de scintigraphie, et chaîne munie d'un tel correcteur.**

(57) L'invention concerne un système correcteur de non-uniformité spatiale de gain dans les chaînes de scintigraphie.

Afin de réduire la largeur de la fenêtre d'énergie utilisée dans ces chaînes, et simplifier les opérations de détermination de chaque point, l'invention prévoit, dans le cas d'une détermination par quatre signaux, A, B, C, D, de considérer le plus grand de ces quatre signaux, à l'exclusion des autres, pour la comparaison avec le niveau de référence dans cette fenêtre. Cette opération se fait au moyen de quatre diodes (4) montées en parallèle à l'entrée positive d'un amplificateur opérationnel (1) et dont seule celle recevant le plus grand des signaux se trouve dans l'état de conduction ; des dispositions annexes (5 et 12) limitent l'effet de la chute dans la diode en conduction.

Application aux chaînes de scintigraphie médicale.

1

# SYSTEME CORRECTEUR DE NON-UNIFORMITE SPATIALE DE GAIN POUR CHAINE DE SCINTIGRAPHIE, ET CHAINE MUNIE D'UN TEL CORRECTEUR

L'invention concerne un système de correction de la non-uniformité spatiale de gain des chaînes de scintigraphie.

On rappelle brièvement ci-dessous les conditions générales de l'observation scintigraphique, utilisée notamment en médecine.

Un marqueur radioactif est injecté dans l'organe à observer et le rayonnement émis par ses points différents, généralement un rayonnement $\gamma$, sous l'effet de ce marqueur, est utilisé pour impressionner la face d'entrée d'une chaîne de tubes dont la face de sortie donne une image de l'organe en question.

Une telle chaîne comprend généralement au moins deux tubes, l'un convertissant les photons $\gamma$ incidents en un faisceau d'électrons qui, par impacts sur un écran cathodo-luminescent, donne une première image, optique, de l'objet observé, et l'autre captant, par son écran d'entrée, cette image, et la transformant en une série de signaux électriques au niveau de son écran de sortie, ou face de sortie de l'ensemble.

On n'entrera pas dans le détail de la structure de ces tubes ; on dira simplement que l'écran d'entrée du premier comporte nécessairement, dans le cas du rayonnement $\gamma$ en question, un scintillateur, et la face de sortie du second des moyens pour engendrer ces signaux électriques. Ce deuxième tube peut être tout simplement un intensificateur d'images terminé, lui aussi, par un écran cathodoluminescent, vers lequel sont dirigés les électrons d'une photocathode et observé par quatre photo-multiplicateurs qui assurent cette transformation. Il peut comporter aussi, à la place de cet écran de sortie, un détecteur de rayonnements ionisants, en l'occurence des électrons de la photocathode, délivrant directement de tels signaux électriques.

Que ce soit l'une ou l'autre de ces versions que l'on pratique, la qualité de l'image finale, et sa signification, dépendent toujours de la discrimination que l'on est capable d'établir entre les rayons $\gamma$ réellement émis par le point atteint par le marqueur et ceux faussement émis, pour ainsi dire, par le même point, par effet Compton à partir de la matière voisine.

Or, à un marqueur donné correspond un niveau d'énergie bien déterminé, qui fluctue peu - de moins de ± 10 % - autour d'une valeur caractérique de ce marqueur, 140 keV par exemple dans le cas du technétium.

Un moyen d'éliminer l'erreur est donc de soumettre chaque signal, au moment où il est reçu sur la face de sortie, à une comparaison avec le niveau en question. Cette opération se fait dans ce que l'on appelle, dans la technique de ces chaînes, une fenêtre d'énergie, dont la largeur est celle définie par la marge de fluctuation précédente.

En fait, le problème est moins simple à cause des distorsions diverses dont sont affectées ces chaînes, et dont le résultat est que le gain des images successives de la chaîne n'est pas constant sur toute leur surface. Par un tel gain on entend, pour chaque point, le rapport entre l'intensité du signal image, c'est à-dire sa luminance lorsqu'il s'agit d'un impact sur un écran luminescent, et celle du signal d'entrée correspondant, c'est-à-dire l'énergie du rayon radioactif émis par le point, énergie à laquelle est sensiblement proportionnelle la quantité de photons émis par le scintillateur.

Ceci a pour conséquence que la largeur de la fenêtre utilisée à cette comparaison devrait être choisie en fonction du gain en chaque point, déterminé par exemple par une expérience préalable. Une telle condition, parfaitement réalisable, alourdit la structure et l'exploitation de la chaîne, notamment en augmentant les temps morts.

Toutes sortes de solutions ont été proposées à ce problème. On citera, parmi elles, celles décrites dans les brevets français 75.16406 (2 312 790) et 76.14957 (2 352 346). On citera aussi, comme se rapportant en général à ces signaux électriques et à leur traitement, le brevet français 74.37681 publié sous le numéro 2 251 907, ainsi que l'article de G.ROUX et al intitulé "Détecteur photoélectronique analogique de la position de scintillations faiblement lumineuses" paru dans Advances in Electronics and Electron Physics, 5th symposium on photoelectronic image devices Academic Press, 1972, et le brevet français 75.40299 (2 366 689), dans lesquels on trouvera des précisions concernant ce genre de chaînes.

En général les signaux de chaque point sont au nombre de quatre, A, B, C, D que l'on traite en formant les sommes A + C et B + D et les différences A - C et B - D ces signaux sont ceux notamment des photo-multiplicateurs observant dans sa totalité le champ de l'écran de sortie.

Ils sont utilisés, à la fois, à la mesure de l'intensité du rayonnement du point et à sa localisation.

La présente invention décrit une solution à ce problème qui met en oeuvre une disposition simple et peu coûteuse tout en permettant d'assurer le gros de la correction désirée.

L'invention est basée sur la constatation que, généralement, les gains en question décroissent du centre des écrans vers leur périphérie. Cela est vrai notamment pour les écrans luminescents des tubes opto-électroniques de la chaîne à laquelle on s'est référé plus haut, où cette décroissance suit une loi sensiblement parabolique. L'affaiblissement constaté dans ce cas est de l'ordre de 1/1,8.

Désormais, il apparaît que tous les signaux périphériques doivent être systématiquement majorés pour se rapprocher de leur valeur réelle.

Or, comme on l'a dit et comme il ressort des documents cités, le calcul de la valeur du signal d'un point se fait en considérant quatre quantités A, B, C, D attachées à ce point. Selon l'invention parmi ces quatre quantités seule sera considérée la plus grande d'entre elles ; l'affaiblissement du gain du centre vers la périphérie des écrans se trouvera ainsi compensé et la largeur de fenêtre néces saire réduite. Cette largeur sera prise constante, pour tous les points observés.

Il est ainsi possible de réduire l'écart entre les gains maximum et minimum de la valeur précédente, de 1,8, à 1, 25 environ.

L'établissement de la largeur de fenêtre à une valeur constante, et réduite par rapport à celle nécessaire en l'absence de compensation, simplifie les opérations sur les signaux des points, dans une mesure qui dépend du système adopté. Mais il peut permettre notamment de se passer des deux étapes pratiquées dans certains systèmes, où une première fenêtre, large, est utilisée dans la phase de localisation, et une fenêtre plus étroite dans la phase de sélection des points significatifs, c'est-à-dire des points validés après la comparaison.

L'invention concerne une système correcteur de non-uniformité spatiale de gain pour chaîne de scintigraphie, dans laquelle le sujet à observer est soumis à l'action d'un marqueur radioactif sous l'effet duquel chacun de ses points émet un rayonnement capté par la chaîne, qui lui fait correspondre quatre signaux électriques à partir desquels est élaboré le signal du point de l'image correspondant, élaboration ayant en particulier pour objet de déterminer l'intensité du rayonnement du point, et de la comparer avec un niveau moyen, fixé à l'avance pour un marqueur déterminé, dans une fenêtre d'énergie d'une largeur déterminée autour de ce niveau, ce système étant caractérisé en ce qu'il comprend des moyens assurant, pour chaque point, le prélèvement du plus grand des quatre signaux de ce point et l'injectant dans ladite fenêtre.

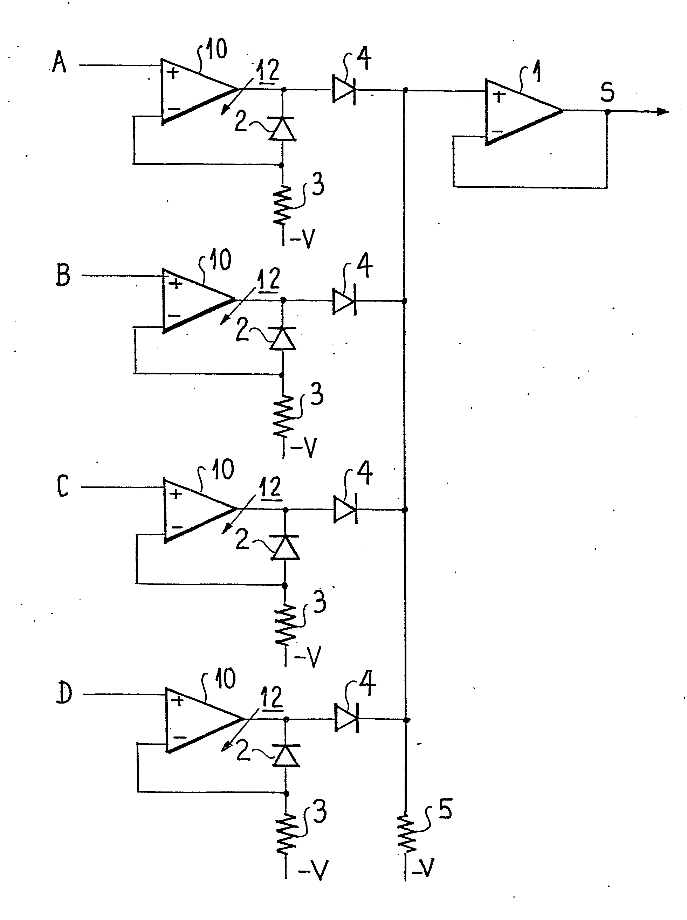

L'invention est décrite ci-dessous, à titre non limitatif, dans une de ses variantes ; elle sera mieux comprise en se reportant à la figure jointe et à la description qui en est faite dans ce qui suit.

La figure représente le schéma d'un correcteur de l'invention.

Le système correcteur de l'invention , réalisé à l'état solide,comprend un amplificateur opérationnel 1, à l'entrée positive duquel sont reliées, comme le montre le dessin, quatre diodes, identiques, portant toutes le repère 4 et qui recoivent chacune l'un des quatre signaux A, B, C, D du point en cours d'observation. Ces diodes se trouvent en conduction lorsque la tension du signal qui leur est appliqué est suffisante. Le système est réglé de façon qu'une seule d'entre elles se trouve dans cet état de conduction lors de l'application des signaux A, B, C, D.

Cette diode transmet l'information à l'amplificateur opérationnel 1, dont la sortie S est reliée (flèche) à la fenêtre d'énergie, non représentée. Les autres diodes sont à cet instant dans l'état de polarisation inverse dans les conditions de fonctionnement prévues du schéma de la figure. Ainsi se trouve réalisée l'opération "plus grand des quatre signaux". Une résistance 5 relie les électrodes positives des diodes à un point de potentiel négatif fixe - V, de façon à compenser la chute de tension dans la diode en état de conduction. La valeur de cette résistance est de l'ordre de quelques kilo ohms pour des diodes 4 au silicium dont la tension de seuil est de 0,6 volt et le courant de conduction de 1mA.

Dans un but semblable, chaque diode 4 est précédée d'un montage 12, comprenant une diode 2, elle aussi reliée par une résistance 3, de valeur élevée, au point de potentiel négatif - V; ces diodes sont montées dans chacune des branches entre la sortie d'un amplificateur opérationnel 10, et l'entrée négative de celui-ci ; les signaux A, B, C, D sont appliqués aux entrées positives des amplificateurs opérationnels 10. Les diodes 2 sont choisies préférentiellement identiques aux diodes 4 et les résistances 3 et 5 égales.

L'invention s'applique à toutes les chaînes de scintigraphie dans lesquelles la détermination de chaque point se fait au moyen de quatre signaux électriques. Elle s'applique aussi bien, comme on l'a dit, au cas où ces signaux sont ceux de photo-multiplicateurs ou ceux d'un détecteur d'impacts.

On signale cependant que, dans le cas de détecteurs d'impacts, avec deux électrodes sur une face du cristal détecteur et deux sur l'autre (voir le brevet cité 2 251 907), on peut avoir intérêt, pour rendre plus uniforme le relèvement du gain dans toutes les directions autour du centre du détecteur, à pondérer le résultat de l'opération "plus grand des quatre" par la moyenne de deux opérations "plus grand des deux" effectuées sur la paire d'électrodes de chaque face.

6

## REVENDICATIONS

1. Système correcteur de non-uniformité spatiale de gain pour chaîne de scintigraphie, dans laquelle le sujet à observer est soumis à l'action d'un marqueur radioactif sous l'effet duquel chacun de ses points émet un rayonnement capté par la chaîne, qui lui fait correspondre quatre signaux électriques à partir desquels est élaboré le signal du point de l'image correspondant, élaboration ayant en particulier pour objet de déterminer l'intensité du rayonnement du point, et de la comparer avec un niveau moyen, fixé à l'avance pour un marqueur déterminé, dans une fenêtre d'énergie d'une largeur déterminée autour de ce niveau, caractérisé en ce qu'il comprend des moyens (1, 4) assurant, pour chaque point, le prélèvement du plus grand des quatre signaux de ce point et l'injectant dans ladite fenêtre.

2. Système correcteur suivant la revendication 1, caractérisé en ce que ces moyens consistent en un amplificateur opérationnel (1) en quatre diodes identiques, à l'état solide (4), recevant chacune l'un des quatre signaux (A, B, C, D), diodes reliées en parallèle à l'entrée positive de l'amplificateur opérationnel, dont la sortie (S) est reliée à la fenêtre d'énergie, la diode qui reçoit le plus grand des signaux se trouvant seule dans l'état de conduction au moment de la réception de ces signaux.

3. Système correcteur suivant la revendication 2, caractérisé en ce que le point commun aux quatre diodes (4) est relié à un potentiel négatif fixe - V par l'intermédiaire d'une résistance de chute (5) de valeur élevée.

4. Système correcteur suivant la revendication 2, caractérisé en ce que chaque signal est appliquée à la diode correspondante par l'intermédiaire d'une boucle (12), comprenant un amplificateur opéra tionnel auxiliaire (10) dont la sortie est reliée à la diode, à l'entrée positive duquel est appliqué le signal, et dont la sortie est reliée à l'entrée négative à travers une autre diode (2).

5. Système correcteur suivant la revendication 4, caractérisé en ce que la sortie négative de l'amplificateur auxiliaire (10) est reliée au potentiel - V par une résistance de chute (3) de valeur élevée.

6. Système correcteur pour chaîne de scintigraphie dans laquelle les quatre signaux en question sont ceux d'un détecteur à l'état solide, consistant en une plaquette d'un corps semi-conducteur munie d'un couple d'électrodes parallèles sur l'une de ces faces et d'un second couple d'électrodes orthogonales au précédentes sur l'autre face, sur lesquelles sont prélevés ces signaux, caractérisé en ce qu'il comporte en outre des moyens assurant, pour chaque point, le prélèvement du plus grand des deux signaux de chacun des couples et l'élaboration de leur moyenne, et des moyens réalisant la moyenne entre la moyenne précédente et le plus grand des quatre signaux.

7. Chaîne de scintigraphie, caractérisée en ce qu'elle comprend au moins un système correcteur de non-uniformité spatiale de gain suivant l'une des revendications 1 à 6.

Office européen
des brevets

**RAPPORT DE RECHERCHE EUROPEENNE**

EP 81 40 1234

| Catégorie | DOCUMENTS CONSIDERES COMME PERTINENTS | | | CLASSEMENT DE LA DEMANDE (Int. Cl.³) |
|---|---|---|---|---|
| | Citation du document avec indication, en cas de besoin, des parties pertinentes | Revendication concernée | | |
| A | FR - A - 2 132 892 (N.V. OPTISCHE INDUSTRIE "DE OUDE DELFT") <br> * Page 3, lignes 35-40 * <br><br> -- | 1 | | G 01 T 1/164 |
| A | US - A - 3 531 651 (A.J. LIEBER et al.) <br> * Figure 1 * <br><br> -- | 1 | | |
| | US - A - 3 305 735 (H. MOREINES) <br> * Colonne 3, lignes 18-26; figure 2 * <br><br> ---- | 2,3 | | **DOMAINES TECHNIQUES RECHERCHES (Int. Cl.³)** <br><br> G 01 T 1/164 |

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

Le présent rapport de recherche a été établi pour toutes les revendications

| Lieu de la recherche | Date d'achèvement de la recherche | Examinateur |
|---|---|---|
| La Haye | 12-10-1981 | ARMSPACH |

**OEB Form 1503.1   06.78**